# EUROPEAN PATENT SPECIFICATION

(11) **EP 3 303 072 B1**
(45) Date of publication and mention of the grant of the patent: **10.07.2019**
(21) Application number: 16745056.8
(22) Date of filing: 26.05.2016
(51) Int. Cl.: B60S 5/06, B60L 50/50

(54) **LIFTING AND AUTOMATIC POSITIONING SYSTEM OF ELECTRIC VEHICLES FOR BATTERY SWAP**
HEBE- UND AUTOMATISCHES POSITIONIERSYSTEM VON ELEKTROFAHRZEUGEN FÜR BATTERIEWECHSEL
SYSTÈME DE LEVAGE ET DE POSITIONNEMENT AUTOMATIQUE DE VÉHICULES ÉLECTRIQUES POUR UN ÉCHANGE DE BATTERIES

(30) Priority: 27.05.2015 IT UB20150792
(43) Date of publication of application: 11.04.2018
(73) Proprietor: Picchio S.p.A., 64010 Ancarano (TE) (IT); Di Pietrantonio, Francesco, 64010 Ancarano (TE) (IT)
(72) Inventor: DI PIETRANTONIO, Francesco, 64010 Ancarano (TE) (IT); DI GUARDIA, Giovambattista, 64016 Sant'Egidio Alla Vibrata (TE) (IT)
(74) Representative: Primiceri, Maria Vittoria
(86) International application number: PCT/EP2016/025050
(87) International publication number: WO 2016/188639

(56) References cited:
- WO-A1-2013/144953
- DE-A1-102011 108 199
- GB-A- 2 027 653
- US-A1- 2010 288 569

## Description

### Field of the invention

The present invention relates to a lifting and automatic positioning system of an electric vehicle during related batteries swap whose degree of accuracy implies that the exact positioning of the vehicle is not delegated to the driver but to automatic refinements occurring in lifting phase.

### Background

The study relating to vehicle using electric motor started with the advent of the car, but from the beginning to the present day dragged out some difficult outstanding issues related to batteries. These issues mainly concern long charging time and the considerable weight, in relation to the range that batteries will be able to guarantee. Technological solutions focus on manufacturing aspects and so on more efficient technical characteristics. Gradual and ongoing improvements are not such as to make electric cars competitive compared to cars with thermal engine. The lack of competitiveness is essentially caused by long charging time which cannot be compared to a full tank and electric cars costs which are still relatively high. Therefore, the use for private purposes in some ways seems to be still discouraged, instead more opportunities are arising for so-called car-sharing systems, related to private companies as well as public administration. They make available to users an electric vehicle fleet for movements usually in medium-large urban areas. The car fleet will earn less if vehicles have to be stopped for a long time because of long charging operations. Technical solutions are attempting to address this issue allowing not the recharge but the battery swap rapidly. In systems of this type one of the fundamental aspects will be to obtain automatically a perfect alignment of the vehicle to the battery swap station, which is an essential condition to insert and release the battery properly.

Changing batteries of an electric vehicle automatically and quickly, it certainly is not a banal operation, especially because of weights and sizes characterizing them. Over time different patents about battery swap stations have been registered. In particular, there is a company that dedicated significant resources to develop these types of solutions: Better Place. However, its solutions can be strongly improved from a point of view of the easy and dimensions of the system, if it is true that the overall project came to a standstill because of huge investments put in place against feedback not good enough despite the support of important car manufacturers. Also as regards the alignment procedure of the electric vehicle with respect to the system that should provide for the battery swap, a suggested solution through WO2013144953 seems, for instance, quite space consuming and consequently also expensive from an economic point of view. The perfect alignment is fundamental, because if the vehicle, and therefore the batteries, are not at the exact position, any automated system will not be able to insert or remove batteries. However, known solutions do not seem to take due account of aspects related to a concrete economic feasibility, logical consequence of studies which aim to reach a consistent simplification of systems.

In the sector relating to lifting systems for battery swap US2010/288569 A1 is known; it discloses a lifting and positioning system of an electric vehicles to replace a battery from the bottom including three or more piston type lifting devices.

In a battery swap station for electric vehicles an essential aspect is the vehicle alignment phase. A robotic system will have make precise movements from the warehouse, where the charged battery is removed, up to the car it will supply. With the same accuracy the system will have to carry out the opposite route removing the low battery from the vehicle and then storing it in one of the specific housings provided in batteries warehouse, where it will be recharged again. Both for the car and housings in the warehouse electrical connections will have to be in a well-defined position in the space, so that the insertion or the removal of the battery take place smoothly. Obviously, housings in the warehouse do not present complications, since they are not moving parts. Vice versa the vehicle will have to be stopped with the maximum precision in the agreed location. The most common solutions provide for lanes to direct the car, as it happens for a train on its rails, while other components have to stop the vehicle movement in a timely manner. However, these solutions are very onerous in terms of realization and not without intrinsic problems, if one considers that a different tyres pressure could change, for example, the height from the floor of electric connections.

### Disclosure of the invention

The aim of the present invention is to supply a lifting and positioning system of an electric vehicle for battery swap in which the vehicle is more accurately and solidly placed with respect to the existing systems at the state of the art. This and other aims are achieved by the present invention that concerns a lifting and automatic positioning system of an electric vehicle during the battery swap. The automated system will insert the battery from the bottom to the top and it will be, of course, fundamental the perfect alignment between electrical connectors on the battery and electrical connectors of the housing obtained in the lower part of the vehicle. The degree of precision required excludes that the exact positioning of the vehicle can be referred exclusively to the driver and therefore automatic refinements are needed. In the present invention these refinements take place in the lifting phase thanks to a group of three piston type lifting devices that will come out from the floor after that the vehicle is placed above the compartment from which the battery will be raised. The end elements of the three piston type lifting devices are represented by load bearing balls. Components fitted on the vehicle bottom, in respect of which pistons will start to exert the pressure needed to lift it, have a conical shape with little hemispheric volumes obtained in the greatest narrowing area in the top, able to perfectly accommodate these balls. Through this geometrical conformation, the vehicle in the raising phase from the ground will be subjected to a self-alignment until the balls of the lifting devices are perfectly housed in the provided spaces. As also the lifting height from the ground of the vehicle is perfectly controllable regardless of the vehicle weight, the system will be able to position in the area with extreme precision electric connectors to which the battery should be connected.

### Brief description of drawings

Further features and advantages of the invention will be more evident from the description of a form of execution, preferred but not exclusive, of the lifting and automatic positioning system of an electric vehicle for a battery swap from the bottom that is the subject-matter of this patent application, described for indicative purposes, but not limited, in the following drawing units, in which:
Fig. 1 shows a bottom view of a hypothetical electric vehicle without bodywork, in which are visible the three components secured to the chassis, in respect of which the three pneumatic pistons push will be carried out.
Fig. 2 is a sectioned view of one of the three components, shaped in an identical way to each other and mounted on the vehicle bottom.
Fig. 3 highlights the lifting device which is coming into contact with the component on the vehicle bottom.
Fig. 4 is a view similar to that of Fig. 3, in which, however, after a first action of the lifting device, the vehicle has already moved naturally, self-aligning with respect to the system.
Fig. 5 shows a side view in which lifting devices do not work yet.
Fig. 6 shows a side view in which lifting devices have partially raised the vehicle, that is automatically aligned.
Fig.7 shows a side view in which the vehicle is lifted into its definitive position.

### Detailed description

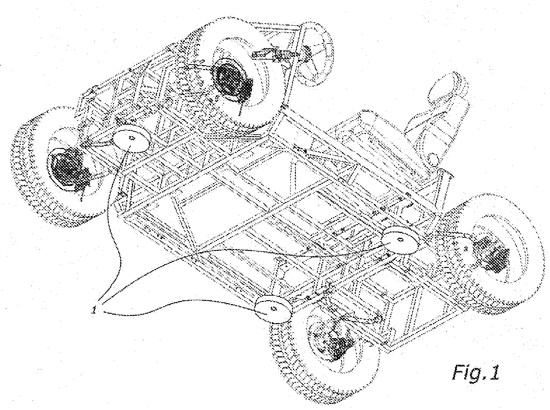

With reference to Fig. 1 there are three identical elements (1) of cylindrical shape secured to the chassis of the electric vehicle, at different points on the bottom of the same. These components will define areas with respect to which the pressure required to lift the vehicle off the ground should be exercised: two are placed in the rear area on the left and right side, while the third is placed in the center in advanced position. These positions will be subject to slight changes according to the type of chassis and also depending on the area that should be left free so that the battery can be moved vertically without encountering obstacles.

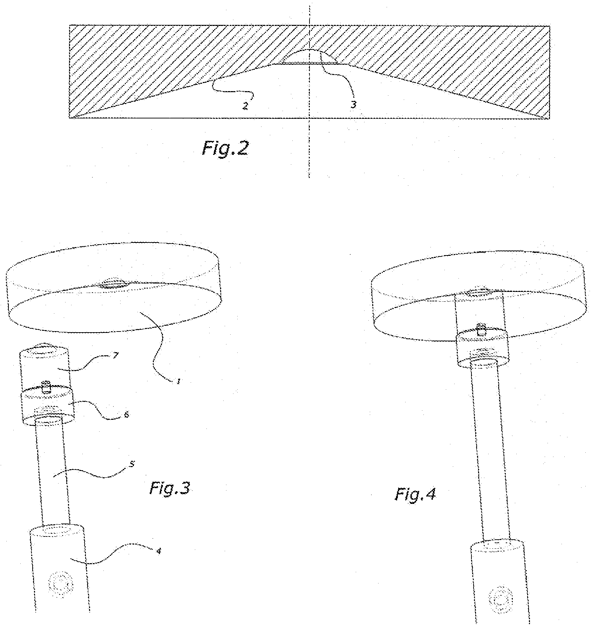

Fig. 2 better shows the shape of the said element (1) as its section is represented. As stated, it is essentially a cylindrical disk that, on the opposite side with respect to the fixing surface to the chassis, is dug in order to generate a conical surface (2) or similar. Instead, at the narrowest point in the top there is a little hemispherical housing (3).

Shape and size of the shaped surface (2) may be optimised each time and consequently may be different also as regards plan view profile, that for example could be elliptical rather than circular.

In Fig. 3, in addition to the above-mentioned element (1), it is visible one of the three lifting devices, which in rest position are situated below the floor level. Every lifter is made up of various components such as: cylinder (4), piston (5), bushing (6) and a load bearing ball (7) at the highest point which has a diameter just less than the housing (3). When the vehicle is placed above the lifting devices, the described system will make operations very easier as it will be sufficient that the same do not act outside the rather large conical area of the above-mentioned components on the vehicle bottom In Fig. 3 is evident, indeed, that one of the three components can start to push upwards without being perfectly centred with respect to the respective element (1).

When the ball (7) comes into contact with the surface (2) it will start a sort of self-centring of the vehicle with respect to the three lifting devices as in the first lifting phase, because of the particular shape of the said surface (2), the vehicle will be forced to move also along a horizontal axis, in addition to the vertical one deriving from the action of the pistons. At a certain point the three surfaces of the hemispherical housings (3) will perfectly correspond with the respective surfaces of the balls (7), thus reaching the configuration of Fig. 4. Therefore, during the following lifting phase, the vehicle will keep moving only with respect to the vertical axis.

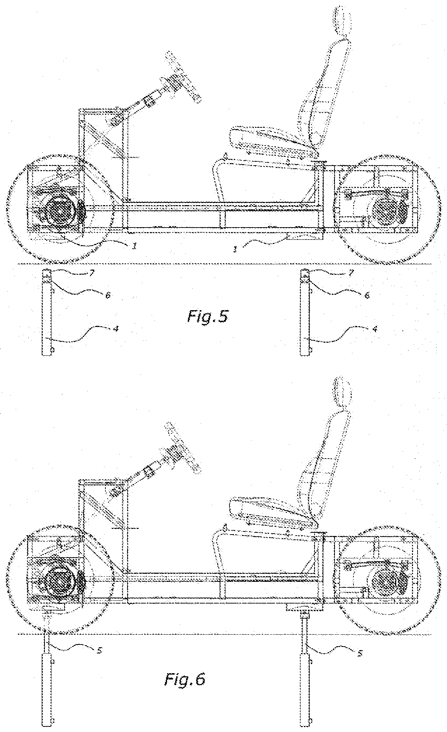

Figg. 5, 6 and 7 refer to the lifting sequence carried out by the system in relation to the above electric vehicle.

In Fig. 5 there is the vehicle placed on the lifting devices, with the latter still in rest position, that is not yet come out of the ground.

In Fig. 6 the first lifting phase has already occurred and then the vehicle has self-centred with respect to the system.

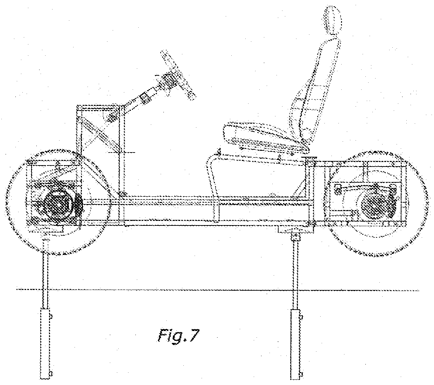

In Fig. 7 also the second lifting phase is finished and the vehicle is placed at the desired height, free from the action of the lifting devices.

Method of using the lifting and automatic positioning system of an electric vehicle for a battery swap from the bottom that is the subject-matter of this patent application can be therefore summarized in the following phases:
- positioning of the electric vehicle in the area defined for the battery swap;
- simultaneous activation of the pistons type lifting devices upward with load bearing balls (7) initially sliding on the shaped surface (2), and then begin applying pressure on the hemispherical housing (3) placed in the highest point;
- interruption of pistons upward movement when the vehicle is exactly placed for the battery swap;
- pistons descent in resting position when the battery is replaced.

Without prejudice to the philosophy of the system above-described, if appropriate, the lifting points could also be more than three. Under the floor there will be different groups of three or more lifters ready to act on the basis of the dimensions of the vehicle and the subsequent arrangement of the components under the same. The type of vehicle will be identified by an automatic detection system that will establish which group of lifting devices should take action.

Moreover, there is the possibility of exchanging components location by installing elements (1) with shaped surface near the soil and pistons type lifting devices with the vehicle chassis, which to lift the vehicle will apply their downwards pressure.

Materials and dimensions of the invention as described above, illustrated in the accompanying drawings and claimed below, can be of any kind according to requirements.

## Claims

1. Lifting and automatic positioning system of an electric vehicle for a battery swap from the bottom including three or more piston type lifting devices and **characterised in that**:
- it comprises three or more identical elements (1) fixed to the bottom of the chassis of said vehicle, cylindrical but with a surface (2) pointed towards the ground suitably shaped rather than flat and with a little hemispherical housing (3) at the highest midpoint;
- the said three or more piston type lifting devices are placed in resting position below the ground level with a top view positioning that is the same as that of the said elements (1) secured to the vehicle and have load bearing balls (7) on the upper extremities, with a diameter just less than said hemispherical housings.

2. Lifting and automatic positioning system according to claim 1 wherein shape and size of the shaped surface (2) may be optimised each time and consequently be different also as regards plan view profile, that for example could be elliptical rather than circular.

3. Method of using the lifting and automatic positioning system according to claim 1 consisting of the following phases:
- positioning of the electric vehicle in the area defined for the battery swap;
- simultaneous activation of the pistons type lifting devices upward with load bearing balls (7) initially sliding on the shaped surface (2), and then begin applying pressure on the hemispherical housing (3) placed in the highest point;
- interruption of pistons upward movement when the vehicle is exactly placed for the battery swap;
- pistons descent in resting position when the battery is replaced.

4. Method of using the lifting and automatic positioning system according to claim 3 wherein there is the possibility of exchanging components location by installing elements (1) with shaped surface near the soil and pistons type lifting devices with the vehicle chassis, which to lift the vehicle will apply their downwards pressure.

## Patentansprüche

1. Hebe- und automatisches Positioniersystem eines Elektrofahrzeugs für einen Batteriewechsel von der Unterseite mit drei oder mehr kolbenartigen Hebevorrichtungen, **dadurch gekennzeichnet, dass**:
- es drei oder mehr identische Elemente (1) umfasst, die an der Unterseite des Fahrgestells des Fahrzeugs befestigt sind, zylindrisch sind, aber mit einer Oberfläche (2), die zum Boden gerichtet und nicht flach, sondern entsprechend geformt ist, und am höchsten Mittelpunkt mit einem kleinen halbkugelförmigen Gehäuse (3);
- die drei oder mehr kolbenartigen Hebevorrichtungen in Ruhestellung unter der Bodenebene mit einer Draufsicht-Positionierung angeordnet sind, identisch der besagten am Fahrzeug befestigten Elemente (1) und an den oberen Enden Kugelrollen (7) mit einem Durchmesser aufweisen, der etwas kleiner als die halbkugelförmigen Gehäuse ist.

2. Hebe- und automatisches Positioniersystem nach Anspruch 1, wobei Form und Größe der geformten Oberfläche (2) jedes Mal optimiert werden können und sich daher auch hinsichtlich des Draufsichtprofils unterscheiden, welches beispielsweise eher elliptisch als kreisförmig sein kann.

3. Verfahren zur Verwendung des Hebe- und automatischen Positioniersystems nach Anspruch 1, bestehend aus den folgenden Phasen:
- Positionierung des Elektrofahrzeugs in dem für den Batteriewechsel definierten Bereich;
- gleichzeitige Aktivierung der kolbenartigen Hebevorrichtungen nach oben mit Kugelrollen (7), die anfangs auf der geformten Oberfläche (2) gleiten und dann beginnen, Druck auf das an der höchsten Stelle angeordnete halbkugelförmige Gehäuse (3) auszuüben;
- Unterbrechung der Aufwärtsbewegung der Kolben, wenn das Fahrzeug genau für den Batteriewechsel positioniert ist;
- Kolben sinken in Ruhestellung, wenn die Batterie gewechselt wird.

4. Verfahren zur Verwendung des Hebe- und automatischen Positioniersystems nach Anspruch 3, wobei die Möglichkeit besteht, die Position der Komponenten auszutauschen, indem in Bodennähe Elemente (1) mit geformter Oberfläche und kolbenartige Hebevorrichtungen mit dem Fahrgestell montiert werden, die zum Anheben des Fahrzeugs Abwärtsdruck ausüben.

## Revendications

1. Système de levage et de positionnement automatique d'un véhicule électrique permettant un échange de batteries par le bas, comprenant trois dispositifs de levage de type à pistons - ou plus de trois - et **caractérisé en ce que** :
- ledit système comporte trois éléments identiques ou plus (1) fixés à la partie inférieure du châssis du véhicule, cylindriques mais présentant une surface (2) orientée vers le sol, de forme appropriée et non plate, dotée d'un petit logement hémisphérique (3) situé à son point médian le plus élevé ;
- les trois dispositifs - ou plus - de levage de type à pistons sont placés, en position de repos, au-dessous du niveau du sol - en ayant un positionnement qui, vu en plan, est le même que celui des éléments susdits (1) fixés au véhicule - et comportent des billes portantes (7) sur leurs extrémités supérieures, d'un diamètre légèrement inférieur à celui des logements hémisphériques.

2. Système de levage et de positionnement automatique selon la revendication 1, dans lequel la forme et la taille de la surface profilée (2) peuvent être optimisées à chaque fois et, par conséquent, être également différentes pour ce qui est du profil de la vue en plan, susceptible d'être par exemple elliptique plutôt que circulaire.

3. Procédé d'utilisation du système de levage et de positionnement automatique selon la revendication 1, comprenant les phases suivantes :
- positionnement du véhicule électrique dans la zone affectée à l'échange de batteries ;
- actionnement simultané des dispositifs de levage de type à pistons vers le haut, les billes portantes (7) se déplaçant initialement sur la surface profilée (2) et exerçant ensuite une pression sur le logement hémisphérique (3) situé au point le plus élevé ;
- interruption du mouvement des pistons vers le haut lorsque le véhicule se trouve placé à l'endroit précis prévu pour l'échange de batteries ;
- descente des pistons en position de repos lorsque la batterie a été remplacée.

4. Procédé d'utilisation du système de levage et de positionnement automatique selon la revendication 3, dans lequel il est possible de changer l'emplacement des composants en installant des éléments (1) comprenant une surface profilée à proximité du sol et des dispositifs de levage de type à pistons appuyant sur le châssis du véhicule qui, pour soulever le véhicule, exerceront leur pression vers le bas.
